# FASCICULE DE BREVET EUROPEEN

(11) **EP 1 459 885 B1**
(45) Date de publication et mention de la délivrance du brevet: **08.08.2012**
(21) Numéro de dépôt: 04290605.7
(22) Date de dépôt: 05.03.2004
(51) Int. Cl.: B32B 27/34

(54) **Structure multicouche à base de polyamides et de copolymères greffés à blocs polyamides**
Mehrschichtstruktur aus Polyamide und Polyamid enthaltende gepfropfte Copolymere
Multilayer structure of polyamides and graft copolymers containing polyamide blocks

(30) Priorité: 21.03.2003 FR 0303494
(43) Date de publication de la demande: 22.09.2004
(73) Titulaire: ARKEMA FRANCE, 92700 Colombes (FR)
(72) Inventeur: Baumert, Martin, 27470 Serquigny (FR); Micheneau, Sébastien, 27000 Evreux Saint Michel (FR); Montanari, Thibault, 27300 Bernay (FR)
(74) Mandataire: Delprat, Corinne

(56) Documents cités:
- EP-A- 0 568 707
- WO-A-02/28959
- US-A- 5 278 229
- US-A- 5 850 855

## Description

### [Domaine de l'invention]

La présente invention concerne des structures à base de polyamides et de copolymères greffés à blocs polyamides. Elles comprennent dans cet ordre une couche de polyamide, éventuellement une couche de liant et une couche de copolymères greffés à blocs polyamides. Ces structures sont utiles pour faire des réservoirs, des conteneurs, des bouteilles, des films multicouches et des tubes. Elles peuvent être fabriquées par coextrusion ou coextrusion soufflage. Avantageusement dans ces objets précédents la couche de copolymères greffés à blocs polyamides forme la couche intérieure en contact avec le fluide stocké ou transporté.

Une utilisation particulièrement utile concerne des tubes pour les circuits de refroidissement des moteurs à combustion interne tels que les moteurs des automobiles ou des camions. Les liquides de refroidissement sont en général des solutions aqueuses d'alcools tels que par exemple de l'éthylène glycol, du diethylène glycol ou du propylène glycol. Ces tubes doivent aussi avoir une bonne tenue mécanique et résister à l'environnement du moteur (température, présence éventuelle d'huile). Ces tubes sont fabriqués par coextrusion des différentes couches selon les techniques habituelles des thermoplastiques. Ils peuvent être lisses (de diamètre constant) ou être annelés ou comporter des parties annelées et des parties lisses.

### [L'art antérieur et le problème technique]

Le brevet US 5560398 décrit des tubes pour circuit de refroidissement constitués d'une couche extérieure de polyamide et d'une couche intérieure choisie parmi les polyoléfines, les polymères fluorés, les polyesters et les EVA (copolymères de l'éthylène et de l'acétate de vinyle).

Le brevet US 5716684 décrit des tubes pour circuit de refroidissement constitués d'une couche extérieure de polyamide et d'une couche intérieure en PVDF. Un liant peut être disposé entre ces deux couches.

Le brevet US 5706864 décrit des tubes pour circuit de refroidissement constitués d'une couche extérieure de polyamide et d'une couche intérieure soit en PVDF, soit en polyoléfine soit en polyoléfine greffée par anhydride d'acide carboxylique . Un liant peut être disposé entre ces deux couches.

Le brevet US 5850855 décrit des tubes pour circuit de refroidissement constitués dans cet ordre d'une couche extérieure de polyamide à terminaisons amines, d'une couche de polyéthylène greffé par l'anhydride maléique et d'une couche intérieure en polyoléfine ou en HDPE (abréviation de High Density Polyethylen ou polyéthylène haute densité) greffé par des silanes. Selon une variante ils sont constitués dans cet ordre d'une couche extérieure de polyamide à terminaisons amines, d'une couche de polypropylène greffé par l'anhydride maléique et d'une couche intérieure qui est un mélange de polypropylène et d'élastomère EPDM (élastomère éthylene-propylène-diène).

Les tubes qui ont une couche intérieure en polymère fluoré résistent bien au liquide de refroisissement mais ils sont très coûteux et difficiles à extruder.

On a maintenant trouvé que des copolymères greffés à blocs polyamides resistaient particulièrement bien au liquide de refroidissement même à haute température. Ces polymères sont connus en eux mêmes mais des structures à base de polyamides et de ces polymères n'ont jamais été décrites.

Le brevet US 3976720 décrit des copolymères greffés à blocs polyamides et leur utilisation comme compatibilisant dans des mélanges de polyamide et de polyoléfine. On commence par effectuer la polymérisation du caprolactame en présence de la N-hexylamine pour obtenir un PA 6 ayant une extrémité amine et une extrémité alkyle. Puis ce PA 6 est attaché sur un tronc constitué d'un copolymère de l'éthylène et de l'anhydride maleique par réaction de l'anhydride avec l'extrémité amine du PA 6. On obtient ainsi un copolymère greffé à blocs polyamides qui est utilisé à raison de 2 à 5 parties en poids pour compatibiliser des mélanges comprenant 75 à 80 parties de PA 6 et 20 à 25 parties de polyéthylène haute densité (HDPE). Dans ces mélanges le polyéthylène est dispersé sous forme de nodules de 0,3 à 0,5 µm dans le polyamide.

Le brevet US 3963799 est très proche du précédent, on y précise que le module de flexion des mélanges de PA 6, de HDPE et de compatibilisant est de l'ordre de 210000 psi à 350000 psi soit 1400 à 2200 MPa.

Le brevet EP 1036817 décrit des copolymères greffés similaires à ceux décrits dans les brevets US cités ci dessus et leur utilisation comme primaire, liant pour des encres ou des peintures sur un substrat en polyoléfine. Pour ces usages les copolymères sont appliqués en solution dans le toluène.

Le brevet US 5342886 décrit des mélanges de polymères comprenant un compatibilisant et plus particulièrement des mélanges de polyamide et de polypropylène. Le compatibilisant est constitué d'un tronc en polypropylène sur lequel sont attachés des greffons en polyamide. On prépare ce compatibilisant à partir d'un polypropylène homopolymère ou copolymère (le tronc) sur lequel on greffe de l'anhydride maleique. Séparément on prépare du polyamide a terminaison monoamine c'est à dire ayant une extrémité amine et une extrémité alkyle. Puis par mélange à l'état fondu le polyamide monoaminé vient se fixer sur le tronc de polypropylène par réaction entre la fonction amine et l'anhydride maléique.

La demande de brevet WO 0228959 décrit des mélanges comprenant en poids, le total étant 100 %, 1 à 100 % d'un copolymère greffé à blocs polyamide constitué d'un tronc en polyoléfine et d'en moyenne au moins un greffon en polyamide dans lequel:
■ les greffons sont attachés au tronc par les restes d'un monomère insaturé (X) ayant une fonction capable de réagir avec un polyamide à extrémité amine,
■ les restes du monomère insaturé (X) sont fixés sur le tronc par greffage ou copolymérisation depuis sa double liaison,
■ 99 à 0 % d'une polyoléfine souple de module élastique en flexion inférieure à 150 MPa à 23°C et présentant un point de fusion cristalline compris entre 60°C et 100°C.

Ces mélanges sont utiles pour faire des adhésifs, des films, des bâches, des geomembranes fait par extrusion, calandrage ou thermogainage/formage, des couches de protection de câbles électriques et des peaux selon la technique du slush molding.

Le brevet US5278229 décrit une composition à base de polyoléfine comprenant :
■ de 50 à 99,5% en poids de polyoléfine ;
■ de 4 à 35% en poids d'un copolymère saponifié d'éthylène et d'acétate de vinyle ;
■ de 1 à 15% d'un polymère obtenu par une polyoléfine greffée acide carboxylique ayant réagi avec un polyamide.

Le document EP0568707 A1 décrit à la revendication 5 une composition comprenant :
■ de 70 à 99% en masse d'un copolymère éthylénique comprenant de l'éthylène, un anhydride d'acide et un autre comonomère ; et
■ de 1 à 30% en masse d'un copolyamide.

Cette composition de type hot-melt peut être utilisée comme couche adhésive à des matériaux tels que les mousses en polyuréthane ou les pièces injectées en polypropylène.

### [Brève description de l'invention]

La présente invention concerne une structure multicouche à base de polyamides et copolymères greffés à blocs polyamide comprenant dans cet ordre :
a) une première couche (1) formée d'un polyamide (A) ou bien d'un mélange de polyamide (A) et de polyoléfine (B) à matrice polyamide,
b) éventuellement une couche (2 bis) de liant,
c) une couche (2) constituée de copolymère greffé à blocs polyamide constitué d'un tronc en polyoléfine et d'au moins un greffon en polyamide dans lequel :
   ■ les greffons sont attachés au tronc par les restes d'un monomère insaturé (X) ayant une fonction capable de réagir avec un polyamide ayant une extrémité amine,
   ■ les restes du monomère insaturé (X) sont fixés sur le tronc par greffage ou copolymérisation depuis sa double liaison,
   ■ les couches (1), (2 bis), et (2) étant successives et adhérant entre-elles dans leur zone de contact respective.

Selon une variante la structure comprend une couche (3) en polyamide ou en polyoléfine, cette couche étant disposée du coté de la couche (2) et une couche éventuelle de liant (3 bis) étant disposé entre la couche (2) et la couche (3).

Ces structures sont utiles pour faire des réservoirs, des conteneurs, des bouteilles, des films multicouches et des tubes. Elles peuvent être fabriquées par coextrusion ou coextrusion soufflage.

L'invention concerne aussi ces réservoirs, conteneurs, bouteilles, films multicouches et tubes.

Avantageusement dans ces objets précédents la couche (2) de copolymères greffés à blocs polyamides ou la couche (3) forme la couche intérieure en contact avec le fluide stocké ou transporté.

L'invention concerne aussi ces réservoirs, conteneurs, bouteilles, films multicouches et tubes dans lesquels la couche (2) de copolymères greffés à blocs polyamides ou la couche (3) forme la couche intérieure en contact avec le fluide stocké ou transporté.

Une utilisation particulièrement utile concerne des tubes pour les circuits de refroidissement des moteurs à combustion interne tels que les moteurs des automobiles ou des camions.

Selon une autre forme l'invention concerne aussi des objets monocouches tels que des réservoirs, conteneurs, bouteilles, films et tubes constitués du matériau de la couche (2) précédente.

L'invention concerne aussi l'utilisation de ces objets.

### [Description détaillée de l'invention]

**S'agissant de la couche (1) en polyamide (A) on entend par polyamide les** produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;

Avantageusement dans ces objets précédents la couche (2) de copolymères greffés à blocs polyamides ou la couche (3) forme la couche intérieure en contact avec le fluide stocké ou transporté.

L'invention concerne aussi ces réservoirs, conteneurs, bouteilles, films multicouches et tubes dans lesquels la couche (2) de copolymères greffés à blocs polyamides ou la couche (3) forme la couche intérieure en contact avec le fluide stocké ou transporté.

Une utilisation particulièrement utile concerne des tubes pour les circuits de refroidissement des moteurs à combustion interne tels que les moteurs des automobiles ou des camions.

### [Description détaillée de l'invention]

**S'agissant de la couche (1) en polyamide (A) on entend par polyamide** les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6/12 et le PA 6/6-6.

On peut utiliser des mélanges de polyamide. Avantageusement la viscosité relative des polyamides, mesurée en solution à 1 % dans l'acide sulfurique à 20°C, est comprise entre 1,5 et 6.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre *M̅n̅* des séquences polyamides est comprise entre 300 et 15 000 et de préférence entre 600 et 5 000. La masse *M̅n̅* des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyéther sur la quantité de polyamide est, en poids, compris avantageusement entre 10/90 et 60/40. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

Ce polyamide (A) est avantageusement un PA 11 ou un PA 12. Avantageusement ce polyamide de la couche (1) est plastifié par des plastifiants usuels tels que le n-butyl benzène sulfonamide (BBSA), les copolymères comprenant des blocs polyamides et des blocs polyéthers, les EPR et les EPR maléisés.

**S'agissant de la couche (1) en mélange de polyamide (A) et de polyoléfine (B) à matrice** polyamide le polyamide peut être choisi parmi les polyamides précédents. On utilise avantageusement le PA 6, le PA 6-6 et le PA 6/6-6.

**Quant à la polyoléfine (B) du mélange de polyamide (A) et de** polyoléfine **(B) à matrice polyamide** elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène ;
- les homopolymères ou copolymères du propylène ;
- les copolymères éthylène/alpha-oléfine tels qu'éthylène/propylène, les EPR(abréviation d'éthylène-propylene-rubber) et éthylène/propylène/diène (EPDM) ;
- les copolymères blocs styrène/éthylène-butène/styrène (SEBS), styrène/butadiène/styrène (SBS), styrène/isoprène/ styrène (SIS), styrène/éthylène-propylène/styrène (SEPS) ;
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40 % en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5 % en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5 % en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader^{®} de la Demanderesse ou des polyoléfines greffées par de l'anhydride maléique comme les Orevac^{®} de la Demanderesse ainsi que des ter polymères de l'éthylène, d'acrylate d'alkyle et d'acide (meth) acrylique ou les terpolymères éthylène-acétate de vinyle-anhydride maléique. On peut citer aussi les homopolymères ou copolymères du polypropylène greffés par un anhydride d'acide carboxylique puis condensés avec des polyamides ou des oligomères mono aminés de polyamide.

Le MFI de (A), les MFI de (B1) et (B2) peuvent être choisis dans une large plage il est cependant recommandé pour faciliter la dispersion de (B) que les viscosités de (A) et de (B) soient peu différentes.

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

Le mélange de polyamide (A) et de polyoléfine (B) est à matrice polyamide. Habituellement il suffit que la proportion de polyamide du mélange de polyamide (A) et de polyoléfine (B) soit d'au moins 40% en poids et de préférence entre 40 et 75% et mieux entre 50 et 75% pour qu'il y ait une matrice polyamide. C'est le cas des trois premières formes preférées du mélange de polyamide et de polyoléfine. Dans la quatrième forme préférée la phase de polyoléfine est réticulée ce qui assure qu'il n'y a pas inversion de phase et qu'on reste en matrice polyamide.

**Selon une première forme préférée du mélange de polyamide (A) et de polyoléfine (B) à matrice polyamide** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

Selon une variante de cette première forme de l'invention la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et (iii) un polymère (C'2) choisi parmi les élastomères, les polyéthylènes de très basse densité et les copolymères de l'éthylène.

**Selon une deuxième forme préférée du mélange de polyamide (A) et de polyoléfine (B) à matrice polyamide** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée du mélange de polyamide (A) et de polyoléfine (B) à matrice polyamide** la polyoléfine (B) comprend (i) un polyéthylène de type EVA, LLDPE , VLDPE ou metallocene et (ii) un copolymère éthylène - (meth)acrylate d'alkyle -anhydride maléique.

**Selon une quatrième forme préférée du mélange de polyamide (A) et de polyoléfine (B) à matrice polyamide** la polyoléfine comprend deux polymères fonctionnalisés comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant des couches de liant (2 bis) et (3 bis)** on définit ainsi tout produit qui permet une bonne adhésion entre les couches concernées. Le liant est choisi avantageusement parmi les polyoléfines fonctionnalisées et les copolyamides.

**A titre d'exemple de liant à base de polyoléfines fonctionnalisées** on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique, ou des mélanges de ces polymères greffés et de ces polymères non greffés,
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

**Quant aux liants du type copolyamides** utilisables dans la présente invention ils ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Les copolyamides proviennent, par exemple, de la condensation d'acides alpha-oméga aminocarboxyliques de lactames ou de diacides carboxyliques et diamines.

**Selon un premier type les copolyamides** résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2-Azacyclotridécanone).

**Selon un deuxième type les copolyamides** résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

Les procédés de fabrication des copolyamides sont connus de l'art antérieur et ces copolyamides peuvent être fabriqués par polycondensation, par exemple en autoclave.

**Selon un troisième type les copolyamides** sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

**S'agissant du copolymère greffé à blocs polyamides** il peut être obtenu par réaction d'un polyamide à extrémité amine avec les restes d'un monomère insaturé X fixé par greffage ou copolymerisation sur un tronc en polyoléfine.

**Ce monomère X** peut être par exemple un époxyde insaturé ou un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique. A titre d'exemple d'époxydes insaturés, on peut citer :
- les esters et éthers de glycidyle aliphatiques tels que l'allyl glycidyléther, le vinyl glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

**S'agissant du tronc en polyoléfine**, les polyoléfines peuvent être les polyoléfines non fonctionnalisées citées plus haut dans les mélanges de polyamide (A) et de plyolefine (B).

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

S'agissant des polyéthylènes sur lesquels on vient greffer X on entend par polyéthylène des homo- ou copolymères.

A titre de comonomères, on peut citer :
- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyethylene peut comprendre plusieurs des comonomères précédents.

Avantageusement le polyéthylène qui peut être un mélange de plusieurs polymères, comprend au moins 50% et de préférence plus de 75% (en moles) d'éthylène, sa densité peut être comprise entre 0,86 et 0,98 g/cm³. Le MFI (indice de viscosité à 190°C, 2,16 kg) est compris avantageusement entre 5 et 100 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène et de X c'est-à-dire ceux dans lesquels X n'est pas greffé il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). Les (méth)acrylates d'alkyle ont déjà été décrits plus haut. La température de fusion est comprise entre 60 et 100 °C .

Avantageusement il y a en moyenne au moins 1,3 moles de X par mole de chaîne attachées sur le tronc en polyoléfine et de préférence de 1,3 à 10 et mieux de 1,3 à 7. L'homme de métier peut determiner facilement par analyze IRTF le nombre de ces moles X.

**S'agissant du polyamide ayant une extrémité amine** on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides ou des copolyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, d'acide amino-11-undecanoïque et de lauryllactame (PA 6/11/12). L'avantage des copolyamides est qu'on peut ainsi choisir la température de fusion des greffons.

Avantageusement les greffons sont des homopolymères ou copolymères constitués de restes de caprolactame, d'acide amino-11-undecanoïque ou de dodecalactame ou des copolyamides constitués de restes choisis parmi au moins deux des trois monomères précédents.

Le degré de polymérisation peut varier dans de larges proportions, selon sa valeur c'est un polyamide ou un oligomère de polyamide. Dans la suite du texte on utilisera indifferemment les deux expressions pour les greffons.

Pour que le polyamide ait une terminaison monoamine il suffit d'utiliser un limiteur de chaîne de formule : 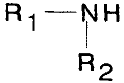 dans laquelle :
- R₁ est l'hydrogène ou un groupement alkyle linéaire ou ramifié contenant jusqu'à 20 atomes de carbone,
- R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement le polyamide à extrémité amine a une masse molaire comprise entre 1000 et 5000 g/mole et de préférence entre 2000 et 4000.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 180 et 250 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

Les proportions de tronc de polyoléfine contenant X (abrégé par PO) et de polyamide à extremité amine (abrégé par PA) sont telles que : PO/PA est entre 55/45 et 90/120 et avantageusement entre 60/40 et 80/20.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides de la présente invention sont caracterisés par une organisation nano structurée avec des lamelles de polyamide d'épaisseur comprise entre 10 et 50 nanomètres.

**S'agissant de la variante dans laquelle la structure comprend une couche (3)** le polyamide de cette couche peut être choisi parmi le polyamide ou les mélanges de polyamide et de polyoléfine à matrice polyamide de la couche (1). Il peut être identique ou différent de la couche (1). La polyoléfine de cette couche (3) peut être choisie parmi les polyoléfines fonctionnalisées ou non qu'on a citées plus haut dans la couche (1). Si cette couche (3) est en polyoléfine avantageusement c'est du polypropylène.

S'agissant plus particulièrement du tube pour les circuits de refroidissement il peut être par exemple de diamètre intérieur 5 à 100mm et d'épaisseur 1 à 10mm. Quant à l'épaisseur des couches on a avantageusement 30 à 95 % de l'épaisseur totale pour la couche 1, 5 à 60 % pour la couche 2, 5 à 30 % pour chaque couche 2 et 3 bis, 5 à 40 % pour la couche 3, le total étant 40 %.

### [Exemples]

### Exemple 1

Un terpolymère éthylène-acrylate de butyle-anhydride maléique contenant en poids 5 à 7 % d'acrylate et 2,8 à 3,4% d'anhydride maléique de melt index égal à 6 g/10 min (sous 2,16 kg /190°C) est malaxé sur une extrudeuse bi-vis co-rotative Leistritz® équipée de plusieurs zones de malaxage, ayant un profil de température entre 180 et 220°C, avec un PA 11 de masse moléculaire de 2500 g/mole à terminaison amine, synthétisé selon la méthode décrite dans le brevet US 5342886. Ce terpolymère contient en moyenne entre 1 et 3 anhydride par chaîne. Les proportions introduites dans l'extrudeuse sont telles que le rapport polyoléfine du tronc / polyamide à terminaison amine est en poids de 80/20.

Nous avons donc réalisé des plaques par compression sur presse ENERPAC® selon les conditions suivantes :
- Avant chaque compression, les granulés sont placés ~10 minutes dans une étuve à 100°C.

Nous avons réalisé 3 plaques de cet échantillon, chaque plaque a nécessité au moins deux passages (pour ôter toutes les bulles) avec entre chaque pressage une découpe (en 4), un recuit en étuve (100°C) et une juxtaposition des morceaux.

Toutes les éprouvettes ont donc été séparées en 2 :
- une 1^{ère} partie (référence) pour déterminer les propriétés avant vieillissement,
- une 2^{ème} partie pour déterminer les propriétés après 1000 heures à 130°C dans un mélange eau/glycol (50/50)

Ainsi nous avons placé la deuxième partie des éprouvettes dans un réacteur autoclave de type "bombe" capable de supporter la pression contenant un mélange 50/50 massique d'eau et d'éthylène glycol, et ce réacteur a également été placé dans une étuve à 130°C.

### Fluage :

Avant d'effectuer les tests de fluage (norme ISO 899), il nous faut conditionner les produits afin d'obtenir au final des éprouvettes "Type IFC" (abréviation d'Institut Français du Caoutchouc) nous avons donc découpé ces éprouvettes dans les plaques. Les tests de fluage consistent à imposer une contrainte constante à un matériau à une température donnée, et à suivre sa déformation dans le temps. La contrainte initiale (force constante) est proportionnelle à la surface de la section centrale de l'éprouvette. Puis après 15 min, on récupère l'éprouvette et on mesure l'allongement par rapport à la longueur de référence initiale après refroidissement et ainsi on obtient la déformation au fluage

### Contrainte à la rupture, allongement à la rupture et module de flexion :

Pour ces mesures la machine de Traction/Compression utilisée est une "MTS Systems DY 21 B n° 525", la norme est référencée "ISO 527-2" et les éprouvettes "Type 5A" (découpées dans les plaques). Les mesures sont effectuées avec une vitesse de tirage de 100mm/min.

### Résultats :

Nous avons donc mesuré le fluage de nos essais (avant et après vieillissement) à 120°C sous 2 bar de contrainte :

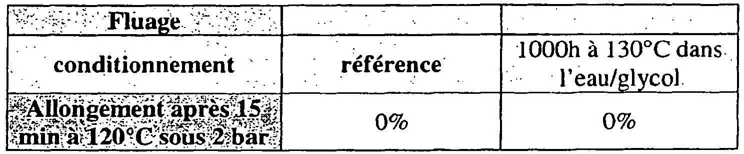

Les essais après vieillissement donnent les mêmes caractéristiques en fluage que la base.

Chaque échantillon a également été testé en Traction afin de mesurer la contrainte et l'allongement à la rupture, ainsi que le module d'élasticité. Les résultats figurent dans le tableau suivant:

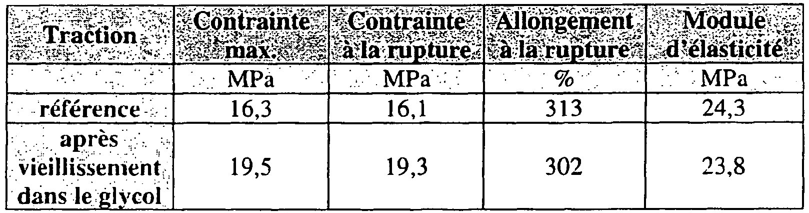

## Revendications

1. Structure multicouche à base de polyamides et copolymères greffés à blocs polyamide comprenant dans cet ordre:
a) une première couche (1) formée d'un polyamide (A) ou bien d'un mélange de polyamide (A) et de polyoléfine (B) à matrice polyamide,
b) éventuellement une couche (2 bis) de liant,
c) une couche (2) constituée de copolymère greffé à blocs polyamide constitué d'un tronc en polyoléfine et d'au moins un greffon en polyamide dans lequel:
• les greffons sont attachés au tronc par les restes d'un monomère insaturé (X) ayant une fonction capable de réagir avec un polyamide ayant une extrémité amine,
• les restes du monomère insaturé (X) sont fixés sur le tronc par greffage ou copolymérisation depuis sa double liaison,
les couches (1), (2 bis), et (2) étant successives et adhérant entre-elles dans leur zone de contact respective.

2. Structure selon la revendication 1 comprenant une couche (3) en polyamide ou en polyoléfine, cette couche étant disposée du coté de la couche (2) et une couche éventuelle de liant (3 bis) étant disposé entre la couche (2) et la couche (3).

3. Structure selon l'une quelconque des revendications précédentes dans laquelle la polyoléfine de la couche (2) est un copolymère de l'éthylène et d'un (meth)acrylate d'alkyle.

4. Structure selon l'une quelconque des revendications précédentes dans laquelle X est un anhydride d'acide carboxylique insaturé.

5. Structure selon l'une quelconque des revendications précédentes dans laquelle le tronc en polyoléfine contenant X est choisi parmi les copolymères éthylène-anhydride maléique et éthylène - (méth)acrylate d'alkyle - anhydride maléique.

6. Réservoirs, conteneurs, bouteilles, films multicouches et tubes constitués de la structure selon l'une quelconque des revendications précédentes.

7. Réservoirs, conteneurs, bouteilles, films multicouches et tubes selon la revendication 6 dans lesquels la couche (2) de copolymères greffés à blocs polyamides ou la couche (3) forme la couche intérieure en contact avec le fluide stocké ou transporté.

8. Tubes pour les circuits de refroidissement des moteurs à combustion interne constitués de la structure selon l'une quelconque des revendications 1 à 5 dans lesquels la couche (2) de copolymères greffés à blocs polyamides ou la couche (3) forme la couche intérieure en contact avec le fluide transporté.

## Claims

1. Multilayer structure based on polyamides and graft copolymers having polyamide blocks, comprising, in this order:
a) a first layer (1) formed from a polyamide (A) or else a polyamide (A)/polyolefin (B) blend having a polyamide matrix;
b) optionally, a tie layer (2bis);
c) a layer (2) based on a graft copolymer having polyamide blocks, formed from a polyolefin backbone and from at least one polyamide graft in which:
■ the grafts are attached to the backbone by the residues of an unsaturated monomer (X) having a functional group capable of reacting with a polyamide having an amine end group;
■ the residues of the unsaturated monomer (X) are attached to the backbone by grafting or copolymerization via its double bond;
the layers (1), (2bis) and (2) being successive and adhering to one another in their respective contact region.

2. Structure according to Claim 1, comprising a polyamide or a polyolefin layer (3), this layer being placed beside the layer (2) and an optional tie layer (3bis) being placed between the layer (2) and the layer (3).

3. Structure according to either of the preceding claims, in which the polyolefin of the layer (2) is an ethylene/alkyl(meth)acrylate copolymer.

4. Structure according to any one of the preceding claims, in which X is an unsaturated carboxylic acid anhydride.

5. Structure according to any one of the preceding claims, in which the polyolefin backbone containing X is chosen from ethylene/maleic anhydride copolymers and ethylene/alkyl(meth)acrylate/maleic anhydride copolymers.

6. Tanks, containers, bottles, multilayer films and tubes formed from the structure according to any one of the preceding claims.

7. Tanks, containers, bottles, multilayer films and tubes according to Claim 6 in which the layer (2) of graft copolymers having polyamide blocks or the layer (3) forms the inner layer in contact with the stored or transported fluid.

8. Tubes for cooling circuits of internal combustion engines, formed from the structure according to any one of Claims 1 to 5, in which the layer (2) of graft copolymers having polyamide blocks or the layer (3) forms the inner layer in contact with the transported fluid.

## Patentansprüche

1. Mehrschichtstruktur auf Basis von Polyamiden und mit Polyamidblöcken gepfropften Copolymeren, umfassend in dieser Reihenfolge:
a) eine erste Schicht (1) aus einem Polyamid (A) oder einer Mischung von Polyamid (A) und Polyolefin (B) mit einer Polyamidmatrix,
b) gegebenenfalls eine Bindemittelschicht (2a),
c) eine Schicht (2) aus mit Polyamidblöcken gepfropftem Copolymer, das aus einer Polyolefin-Hauptkette und mindestens einem Polyamid-Pfropfanteil besteht, wobei:
• die Pfropfanteile über Reste eines ungesättigten Monomers (X) mit einer Funktion, die mit einem Polyamid mit einer Aminendgruppe reagieren kann, an die Hauptkette gebunden sind,
• die Reste des ungesättigten Monomers (X) durch Pfropfung oder Copolymerisation über seine Doppelbindung an der Hauptkette fixiert sind,
wobei die Schichten (1), (2a) und (2) aufeinander folgen und in ihren jeweiligen Kontaktbereichen aneinander haften.

2. Struktur nach Anspruch 1 mit einer Schicht (3) aus Polyamid oder Polyolefin, wobei diese Schicht neben der Schicht (2) angeordnet ist, und einer fakultativen Bindemitttelschicht (3a), die zwischen der Schicht (2) und der Schicht (3) angeordnet ist.

3. Struktur nach einem der vorhergehenden Ansprüche, wobei es sich bei dem Polyolefin der Schicht (2) um ein Ethylen-Alkyl(meth)acrylat-Copolymer handelt.

4. Struktur nach einem der vorhergehenden Ansprüche, wobei es sich bei X um ein ungesättigtes Carbonsäureanhydrid handelt.

5. Struktur nach einem der vorhergehenden Ansprüche, wobei die X enthaltende Polyolefin-Hauptkette unter Ethylen-Maleinsäureanhydrid-Copolymeren und Ethylen-Alkyl(meth)acrylat-Maleinsäureanhydrid-Copolymeren ausgewählt ist.

6. Tanks, Behälter, Flaschen, Mehrschichtfolien und Rohre aus der Struktur nach einem der vorhergehenden Ansprüche.

7. Tanks, Behälter, Flaschen, Mehrschichtfolien und Rohre nach Anspruch 6, wobei die Schicht (2) aus mit Polyamidblöcken gepfropften Copolymeren oder die Schicht (3) die mit dem gelagerten oder transportierten Fluid in Kontakt stehende innere Schicht bildet.

8. Rohre für Kühlkreisläufe von Verbrennungsmotoren aus der Struktur nach einem der Ansprüche 1 bis 5, wobei die Schicht (2) aus mit Polyamidblöcken gepfropften Copolymeren oder die Schicht (3) die mit dem transportierten Fluid in Kontakt stehende innere Schicht bildet.
